# EUROPEAN PATENT APPLICATION

(11) **EP 3 629 401 A1**
(43) Date of publication of application: **01.04.2020**
(21) Application number: 19199415.1
(22) Date of filing: 24.09.2019
(51) Int. Cl.: H01M 4/131, H01M 4/525, H01M 10/054

(54) **POSITIVE ACTIVE MATERIAL FOR POTASSIUM SECONDARY BATTERY AND POTASSIUM SECONDARY BATTERY INCLUDING THE SAME**

(30) Priority: 27.09.2018 KR 20180115032
(71) Applicant: Industry-Academy Cooperation Corps. Of Sunchon National University, Jeollanam-do 57922 (KR)
(72) Inventor: PYO, Myoung-Ho, 57936 Suncheon-si, Jeollanam-do (KR); HAN, Su-Cheol, 57940 Suncheon-si, Jeollanam-do (KR)
(74) Representative: Beck & Rössig European Patent Attorneys

(57) **Abstract**

Disclosed herein are a positive active material for an excellent potassium secondary battery and a potassium secondary battery including the same. The positive active material is constituted of a composition represented by Formula 1 below, and has a transition metal (TM) located at a position of a tetrahedron site and a crystal structure in which a space group is Pbca:

[Formula 1] KₓTMO₂,

wherein 0.7≤X≤1.0, and the TM is one or more selected from among Ti, V, Cr, Mn, Fe, Co, and Ni.

## Description

### CROSS-REFERENCE TO RELATED APPLICATION

This application claims priority to and the benefit of Korean Patent Application No. 10-2018-0115032, filed on September 27, 2018, the disclosure of which is incorporated herein by reference in its entirety.

### BACKGROUND

### 1. Field of the Invention

The present invention relates to a positive active material for a potassium secondary battery and a potassium secondary battery including the same.

### 2. Discussion of Related Art

Since efficient use of produced energy is required for owing to depletion of fossil fuel such as petroleum and coal and owing to environmental pollution due to the use of the fossil fuel, and since a production amount of energy such as solar energy and wind energy, which are produced by eco-friendly methods, is not constant, there is a growing interest in large-capacity secondary batteries which store the produced energy to cope with the demand.

Heretofore, a lithium-ion battery has mostly received attention as a secondary battery. The lithium-ion battery can be charged or discharged with electric energy in a high density for a long period of time so that the use of the lithium-ion battery is rapidly increasing as a power source of a portable electronic device and an electric vehicle and is also widely used for an energy storage system (ESS) so as to store electric power produced by a power plant or efficiently manage electrical energy produced by solar energy or wind energy.

However, lithium used in the lithium-ion battery is a limited resource distributed in a specific region so that there are problems in that the price of lithium is high as well as that it is difficult to cope with an increasing demand for batteries and energy storage devices.

In order to solve these problems, there is a growing interest in a non-lithium secondary battery in which lithium is not use as a main raw material, wherein the non-lithium secondary battery employs alkali metals excluding lithium, alkaline earth metals, Group 3A metals, transition metals, and the like.

Secondary batteries based on Na⁺ and K⁺, which are alkali metal ions that are abundant in the earth, are significantly more inexpensive than lithium ion batteries so that the secondary batteries based on Na⁺ and K⁺ can be suitably used, especially for ESS batteries.

Among the secondary batteries, a metal oxide having a layered structure in the form of O3, P2, and P3, Prussian blue having an open framework structure, phosphate, fluorescent phosphate, pyrophosphate, sulfide, and the like have been developed as positive active materials for sodium ion batteries, but there are few materials satisfying sufficient levels of capacity, lifetime, and the like.

Potassium has a potential similar to that of lithium, and potassium ions have high mobility so that the potential for secondary batteries is considerable, but heretofore, potassium has not received much attention. Consequently, as positive active materials for potassium secondary batteries, studies on a Prussian blue-like material KFe^{III}Fe^{II}(CN)₆ disclosed in the following Patent Document have been actively carried out, and materials including KₓTiS₂, KₓCoO₂, KₓMnO₂, and the like have been reported to be used as positive active materials. However, when compared to a lithium secondary battery or a sodium secondary battery, studies on positive active materials for potassium secondary batteries have hardly been carried out.

Further, adsorption/desorption of K⁺ ions having relatively large sizes degrades electrochemical stability and high-rate characteristics, and this tendency is more apparently exhibited in a crystalline inorganic material. This is because it is difficult to maintain a crystal structure in a sound state due to a relatively large size variation accompanying the adsorption/desorption of K⁺ ions.

### [Prior Art Document]

### [Patent Document]

(Patent Document 1) United States Patent No. 9385370

### SUMMARY OF THE INVENTION

The present invention is directed to a positive active material for a potassium secondary battery having an excellent cycle characteristic and a potassium secondary battery including the same.

According to an aspect of the present invention, there is provided a positive active material for a potassium secondary battery, which is constituted of a composition represented by Formula 1 below, has a transition metal (TM) located at a position of a tetrahedron site and a crystal structure in which a space group is Pbca:

[Formula 1] KₓTMO₂,

wherein 0.7≤X≤1.0, and the TM is one or more selected from among Ti, V, Cr, Mn, Fe, Co, and Ni.

According to another aspect of the present invention, there is provided a potassium secondary battery including a positive active material, which includes a positive electrode, a negative electrode disposed to be spaced a predetermined distance from the positive electrode, a separation membrane disposed between the positive electrode and the negative electrode, and an electrolyte filling in a space between the positive electrode, the negative electrode, and the separation membrane, wherein the positive electrode may include the positive active material.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic diagram for describing a crystal structure of a positive active material according to the present invention;
FIG. 2 is a charging/discharging profile obtained by performing charging and discharging once and performing charging twice in an electrolyte containing K⁺ ions using KFeO₂ synthesized according to one embodiment of the present invention as the positive active material;
FIG. 3 is a charging/discharging profile obtained by performing charging and discharging once and performing charging twice in an electrolyte containing Li⁺ ions using KFeO₂ synthesized according to one embodiment of the present invention as the positive active material;
FIG. 4 is a charging/discharging profile obtained by performing charging and discharging once and performing charging twice in an electrolyte containing Na⁺ ions using KFeO₂ synthesized according to one embodiment of the present invention as the positive active material; and
FIG. 5 is a graph showing X-ray diffraction (XRD) analysis results of samples obtained when KFeO₂ synthesized according to one embodiment of the present invention was charged and discharged once in the electrolyte containing K⁺ ions.

### DETAILED DESCRIPTION OF EXEMPLARY EMBODIMENTS

Hereinafter, a positive active material according to exemplary embodiments and a potassium secondary battery with a positive electrode including the same will be described in more detail. However, the following embodiments are presented by way of example, and the present invention is not limited thereto and is defined by the scope of the appended claims.

As a result of studies for improving low cycle stability and a speed characteristic of a conventional material developed as a positive active material for a potassium secondary battery, inventors of the present invention found that when an oxide constituted of a composition of Formula 1 below, having a transition metal (TM) located at a position of a tetrahedron, and having a crystal structure with a space group of Pbca is used as a positive active material for a potassium secondary battery, it is possible to reduce a structural change occurring during adsorption/desorption of K⁺ ions and to expect high cycle stability, thereby realizing the present invention.

[Formula 1] KₓTMO₂

Here, 0.7<X<1.0, and a TM is one or more selected from among Ti, V, Cr, Mn, Fe, Co, and Ni.

As described above, KₓTMO₂ according to the present invention is characterized by having the crystal structure with the space group of Pbca. Unlike ATMO₂ (here, A is an alkali metal) having a layered structure, the crystal structure is a structure in which a TM element is located at a position of a tetrahedron.

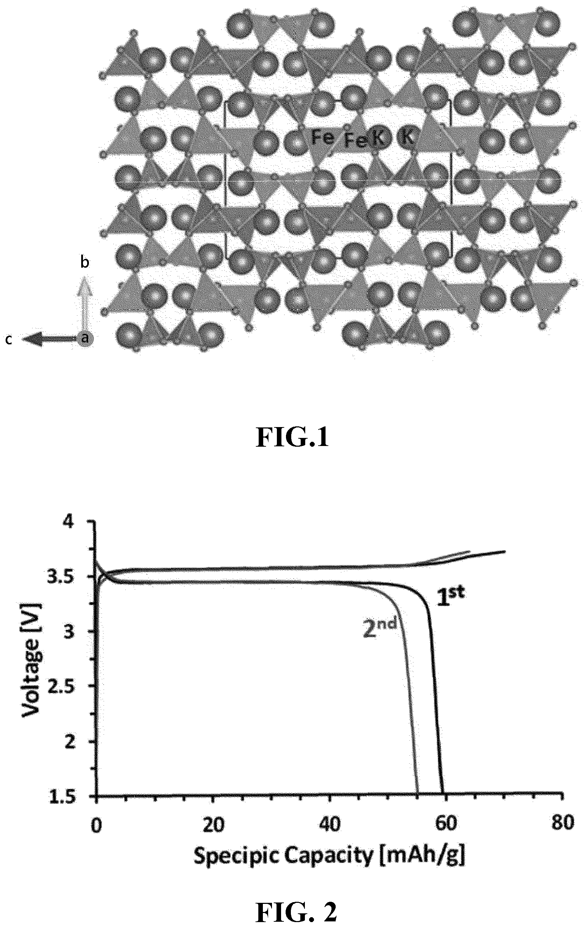

FIG. 1 schematically illustrates a crystal structure of KFeO₂ which has a crystal structure of Pbca and is a positive active material according to one embodiment of the present invention. It can be seen that purple circles represent the K⁺ ions and iron (Fe) which is a TM and located in a brown tetrahedron. A structural change of the crystal structure becomes smaller than that of the layered structure during a process in which the K⁺ ion having a relatively large ionic size relative to Li⁺ or Na⁺ is adsorbed onto or desorbed from a positive active material, and the K⁺ ion is able to easily move such that an excellent cycle characteristic may be expected.

Further, the positive active material according to the present invention may include Fe as the TM and may be phase-separated into a single-phase state constituted of KFeO₂ and a two-phase state of an oxide containing KFeO₂, K, and Fe, and a reversible phase transition of the two-phase state and the single-phase state may occur during charging and discharging processes.

Furthermore, in the positive active material according to the present invention, the oxide containing K and Fe may have a composition of Formula 2 below.

[Formula 2] KₓFe_{1-y}TM_{y}O₂

Here, 0.7≤X≤1.0, 0≤Y<1.0, and a TM is one or more selected from among Ti, V, Cr, Mn, Co, and Ni.

Further, in the positive active material, both crystal structures when the oxide of Formula 2 is KFeO₂ and when the oxide of Formula 2 is K_{0.7}FeO₂ may be a KAlO₂ type having a space group of Pbca. That is, during the charging and discharging processes, the positive active material may maintain the same crystal structure such that high structural stability may be achieved.

Further, initial charging of the positive active material may be performed in an electrolyte containing K⁺ ions.

Alternatively, the present invention may include a positive electrode, a negative electrode disposed to be spaced a predetermined distance from the positive electrode, a separation membrane disposed between the positive electrode and the negative electrode, and an electrolyte filling in a space between the positive electrode, the negative electrode, and the separation membrane, and the positive electrode may include the above-described positive active material.

The positive electrode may include a current collector and a positive active material layer formed on the current collector.

A metal current collector, e.g., an aluminum foil, may be used as the current collector.

A metal current collector, e.g., an aluminum foil, may be used as the current collector.

A positive active material layer may be prepared of a composition in the form of a mixture in which a positive active material powder of Formula 2, a conductive material, a bonding agent, and a solvent are mixed, and then the positive active material layer may be molded and laminated on the metal current collector, or the metal current collector is coated with the positive active material layer such that the positive electrode may be manufactured. However, the present invention is not limited to the above-described methods, and other methods may be used in addition to the above-described method. Carbon black, graphite fine particles, or the like may be used as the conductive material, but the present invention is not limited thereto. Any conductive material may be used as long as it can be used as a conductive material in the art. For example, graphite such as natural graphite, artificial graphite, or the like, carbon black such as carbon black, acetylene black, ketjen black, channel black, furnace black, lamp black, thermal black, or the like, a conductive fiber such as a carbon fiber, a metal fiber, or the like, a metal powder such as a carbon fluoride powder, an aluminum powder, a nickel powder, or the like, a conductive whisker such as a zinc oxide whisker, a potassium titanate whisker, or the like, a conductive metal oxide such as titanium oxide or the like, and a conductive material such as a polyphenylene derivative or the like may be used. A vinylidene fluoride/hexafluoropropylene copolymer, polyvinylidene fluoride (PVDF), polyacrylonitrile, polymethyl methacrylate, polytetrafluoroethylene, a mixture thereof, or a styrene butadiene rubber-based polymer may be used as the bonding agent, but the present invention is not limited thereto. Any bonding agent may be used as long as it can be used as a bonding agent in the art. N-methylpyrrolidone, acetone, or water may be used as the solvent, but the present invention is not limited thereto. Any solvent may be used as long as it can be used in the art. Contents of the positive active material, the conductive material, the bonding agent, and the solvent may be controlled according to a characteristic required for the potassium secondary battery. One or more of the positive active material, the conductive material, the bonding agent, and the solvent may not be used as necessary.

The negative electrode may include a current collector and a negative active material layer formed on the current collector.

The negative electrode active material layer may be manufactured by mixing a negative active material powder, a conductive material, a bonding agent, and a solvent, directly coating a metal current collector with the mixture, and drying the mixture, or by casting a negative active material composition onto a separate substrate, separating the negative active material composition from the substrate, and laminating the negative active material composition on the metal current collector.

The negative active material is not particularly limited as long as it is used in a potassium secondary battery to allow reversible adsorption/desorption of potassium ions. For example, the negative electrode active material includes a potassium metal, a potassium alloy, a carbon-based material, and the like.

In the case of the carbon-based material, any carbon-based negative active material which is commonly used in conventional lithium secondary batteries may be used. For example, crystalline carbon, amorphous carbon, or a mixture thereof may be used. For example, the crystalline carbon may be natural graphite of an amorphous, plate-like, flake, spherical, or fibrous shape, or artificial graphite, and the amorphous carbon may be soft carbon (low-temperature sintered carbon), hard carbon, mesophase pitch carbide, sintered coke, or the like.

Contents of the negative active material, the conductive material, the bonding agent, and the solvent may be controlled, or some among the negative active material, the conductive material, the bonding agent, and the solvent may be omitted according to the application and configuration of the potassium secondary battery.

The separation membrane may have low resistance to the movement of ions contained in the electrolyte as well as a good wetting characteristic with respect to the electrolyte.

For example, the separation membrane may be selected from among a glass fiber, polyester, Teflon, polyethylene, polypropylene, polytetrafluoroethylene (PTFE), and a combination thereof, may be in the form of a non-woven fabric or a woven fabric, and may include polyethylene, polypropylene, and the like which are widely used in lithium ion batteries.

The electrolyte is a non-aqueous electrolyte and may be made of an organic material. A potassium salt may be dissolved in the organic material.

Any organic solvent may be used as long as it can be used as an organic solvent in the art. For example, the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyl dioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

The potassium salt may also be used without limitation as long as it can be used as a potassium salt in the art.

Further, the electrolyte may be a solid electrolyte such as an organic solid electrolyte or an inorganic solid electrolyte. When a solid electrolyte is used, the solid electrolyte may also serve as the separation membrane.

For example, a polyethylene derivative, a polyethylene oxide derivative, a polypropylene oxide derivative, a phosphate ester polymer, poly agitation lysine, polyester sulfide, polyvinyl alcohol, PVDF, and a polymer containing an ionic dissociation group may be used as the organic solid electrolyte.

For example, the inorganic solid electrolyte may be boron oxide, but the present invention is not limited thereto. Any inorganic solid electrolyte may be used as long as it can be used as the solid electrolyte in the art. The solid electrolyte may be formed on the negative electrode by a method such as sputtering or the like.

Like a lithium secondary battery, the positive electrode, the negative electrode, the separation membrane, and the electrolyte are accommodated in a case and finally made into a battery through a general battery manufacturing method.

In this case, the battery is manufactured by a method of stacking and winding the positive electrode, the negative electrode, and the separation membrane, or a method of accommodating the positive electrode, the negative electrode, and the separation membrane in a case by being folded into multiple layers and then injecting the electrolyte into the case and sealing the case. Various materials such as a metal, plastic, and the like may be used as a material of the case, and a shape of the case may be formed in various shapes such as a cylindrical shape, a square shape, a pouch shape, and the like.

The present invention will be described in more detail with reference to the following examples, but the present invention should not be construed as being limited to the following examples.

### [Example]

The positive active material according to the present invention was prepared using a solid phase method. As a raw material powder, a K₂CO₃ powder, and a Fe₂O₃ powder were homogeneously mixed first using a stirrer and then synthesized by charging the mixture into an alumina tube furnace and sintering the charged mixture. The sintering was carried out at a temperature of 900 °C for 12 hours, and, at this point, argon gas was used as atmosphere gas. Thus, an oxide of K and Fe was obtained.

Further, a coin cell was prepared such that 70% by weight of the synthesized powder, 10% by weight of acetylene black, and 20% by weight of PTFE were mixed in a glove box filled with argon, an electrode film coated with aluminum foil was punched and weighed to 2 mg/cm², a glass filter and metal potassium were used as negative electrodes, and an electrolytic solution containing potassium bis (fluorosulfonyl) imide (KFSI) 1M in dimethoxyethane (DME) was used.

Crystal structures of the synthesized material and a sample obtained during a charging/discharging cycle were analyzed by X-ray diffraction (XRD), components of the synthesized material were analyzed using a field emission scanning electron microscope (FESEM) equipped with an inductively coupled plasma-atomic emission spectrometer (ICP-AES) and an energy dispersive X-ray spectrometer (EDX), and a chemical state and a composition of the synthesized material was analyzed using X-ray photoelectron Spectroscopy (XPS). Further, the components of the synthesized material were analyzed using FESEM equipped with ICP-AES and EDX, and the chemical state and the composition of the synthesized material was analyzed using XPS.

As a result of analyzing the components of the synthesized powder using the above-described analysis methods, it was confirmed that the synthesized material according to the embodiment of the present invention was KFeO₂. Further, it was confirmed that the composition of the positive active material after initial charging was performed in the electrolyte containing K⁺ ions was K_{0.7}FeO₂.

Furthermore, KFeO₂ synthesized according to the present invention was used as the positive active material through a coin cell, and charging/discharging was performed once and charging was performed twice in each of electrolytes containing Li⁺ ions, Na⁺ ions, and K⁺ ions so that charging/discharging profiles shown in FIGS. 2 to 4 were obtained.

As can be seen in FIG. 2, KFeO₂ of DME of 1.0 M KFSI was exhibited reversible adsorption/desorption behaviors of K⁺. That is, it was confirmed that KFeO₂ according to the embodiment of the present invention may be used as a positive active material for a potassium secondary battery. Further, a discharge capacity of 59 mAh/g was finally achieved through charging/discharging in DME of 1.0 M KFSI.

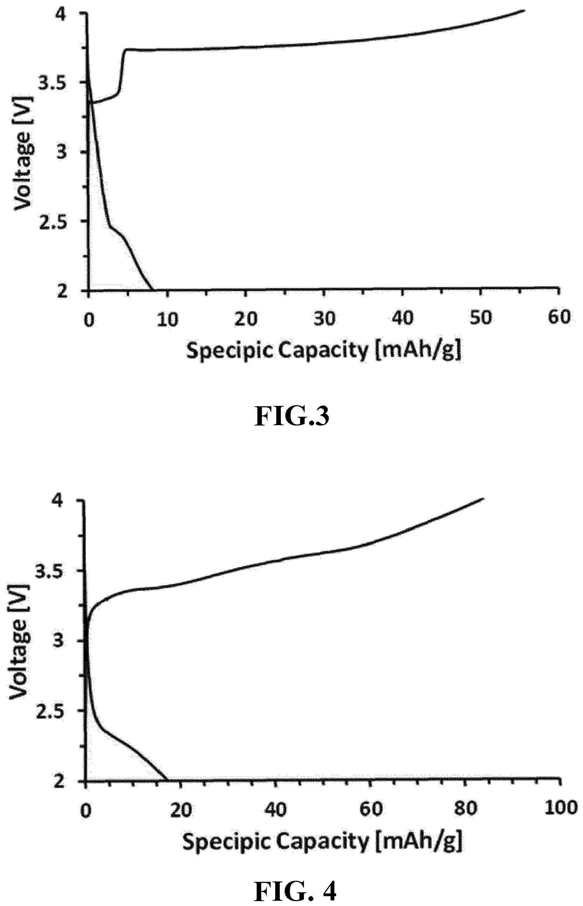

Meanwhile, FIG. 3 shows the result of charging/discharging in the electrolyte containing Li⁺ ions. KFeO₂ caused an oxidation reaction with ethyl carbonate (EC) and diethyl carbonate (DEC) (EC:DEC) and with Li/Li⁺ of 1.0 M LiPF₆ in the range of 2.0 to 4.0 V, and in subsequent discharging, an immediate potential drop was exhibited because Li⁺ was not adsorbed, so it was confirmed that the electrolyte containing Li⁺ ions cannot be used in a battery.

Further, FIG. 4 shows the result of charging/discharging in the electrolyte containing Na⁺ ions. KFeO₂ caused an oxidation reaction with propylene carbonate (PC) and Na/Na⁺ of 1.0 M NaClO₄ in the range of 2.0 V to 4.0 V, and in subsequent discharging, an immediate potential drop was exhibited because Na⁺ was not adsorbed, so it was confirmed that the electrolyte containing Na⁺ ions cannot be used in a battery.

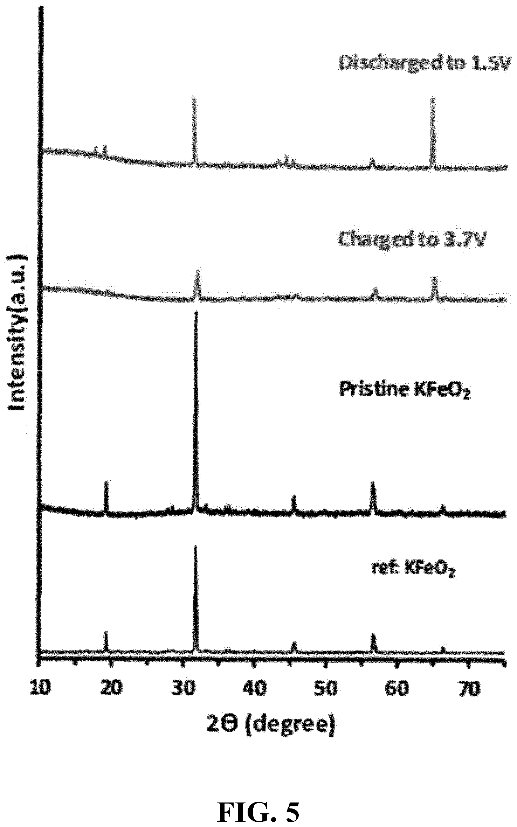

FIG. 5 shows XRD analysis results of samples obtained when KFeO₂ was charged and discharged once in the electrolyte containing K⁺ ions. As can be seen in FIG. 5, it is confirmed that an XRD pattern of an initially synthesized KFeO₂ powder (pristine KFeO₂) coincides with an XRD pattern of inorganic crystal structure database (ICSD) 180530, and an initial crystal structure state is maintained without phase transition even when charging/discharging are repeatedly performed. Further, although not shown in FIG. 5, it was confirmed that the initial crystal structure state was maintained in XRD and XPS analysis of the positive active material after charging/discharging were performed 100 times.

A positive active material according to the present invention has a crystal structure in which a space group is Pbca and maintains the crystal structure during charging/discharging and during a process in which a K⁺ ion having a larger ion size than a Li⁺ or Na⁺ ion is adsorbed or desorbed, and the crystal structure has a change that is smaller than that of the layered structure and allows K⁺ ions to move easily such that an excellent cycle characteristic can be expected.

While the present disclosure has been described with reference to the embodiments shown in the drawings, these embodiments are merely illustrative and it should be understood that various modifications and equivalent other embodiments can be derived by those skilled in the art on the basis of the embodiments. Therefore, the true technical scope of the present invention should be defined by the appended claims.

This research was supported by Creative Materials Discovery Program through the National Research Foundation of Korea (NRF) funded by Ministry of Science, ICT and future (2015M3D1A1069710) and by Basic Science Research Program through the National Research Foundation of Korea (NRF) funded by the Ministry of Education (NRF- 2014R1A6A1030419).

## Claims

1. A positive active material for a potassium secondary battery, which is constituted of a composition represented by Formula 1 below, has a transition metal (TM) located at a position of a tetrahedron site and a crystal structure in which a space group is Pbca:
[Formula 1] KₓTMO₂,
wherein 0.7≤X≤1.0, and the TM is one or more selected from among Ti, V, Cr, Mn, Fe, Co, and Ni.

2. The positive active material of claim 1, wherein the positive active material includes Fe as the TM and is phase-separated into a single-phase state constituted of KFeO₂ and a two-phase state of an oxide containing KFeO₂, K, and Fe, and a reversible phase transition of the two-phase state and the single-phase state occurs during charging and discharging processes.

3. The positive active material of claim 2, wherein the oxide containing K and Fe has a composition represented by Formula 2 below:
[Formula 2] KₓFe_{1-y}TM_{y}O₂,
wherein 0.7≤X≤1.0, 0≤Y<1.0, and the TM is one or more selected from among Ti, V, Cr, Mn, Co, and Ni.

4. The positive active material of one of claims 1 to 3, wherein the positive active material maintains a crystal structure in which a space group is Pbca during the charging and discharging processes.

5. The positive active material of one of claims 2 to 4, wherein the positive active material before the charging and discharging processes is KFeO₂.

6. The positive active material of one of claims 1 to 5, wherein initial charging of the positive active material is performed in an electrolyte containing K⁺ ions.

7. A potassium secondary battery comprising:
a positive electrode;
a negative electrode disposed to be spaced a predetermined distance from the positive electrode;
a separation membrane disposed between the positive electrode and the negative electrode; and
an electrolyte which fills in a space between the positive electrode, the negative electrode, and the separation membrane,
wherein the positive electrode includes the positive active material according to any one of claims 1 to 6.
